# EUROPEAN PATENT APPLICATION

(11) **EP 4 480 325 A1**
(43) Date of publication of application: **25.12.2024**
(21) Application number: 23752835.1
(22) Date of filing: 06.02.2023
(51) Int. Cl.: A23L 5/10, A23L 13/00

(54) **FRIED FOOD PRODUCT**

(30) Priority: 14.02.2022 JP 2022020860
(71) Applicant: Nisshin Seifun Welna Inc., Tokyo 101-8441 (JP)
(72) Inventor: TAKASU, Ryosuke, Fujimino-shi, Saitama 356-8511 (JP); SHIBAMOTO, Noriyuki, Fujimino-shi, Saitama 356-8511 (JP); KOJIMA, Kazuko, Fujimino-shi, Saitama 356-8511 (JP); NAKAMURA, Kenji, Fujimino-shi, Saitama 356-8511 (JP); FUJIBE, Mitsunori, Tokyo 103-8544 (JP)
(74) Representative: Forstmeyer, Dietmar
(86) International application number: PCT/JP2023/003842
(87) International publication number: WO 2023/153371

(57) **Abstract**

The present invention provides a deep-fried food product obtained by coating a ingredient with an oil/fat mixture and then applying a coating material thereto; wherein the oil/fat mixture contains an oil/fat in a liquid form at normal temperature and a powdered oil/fat having a slip melting point of 40°C or higher, and the oil/fat mixture exhibits fluidity at normal temperature. The proportion of the powdered oil/fat mixed is preferably 1 mass% or more and 30 mass% or less relative to the liquid oil/fat. Phosphate cross-linked starch is preferably applied to the ingredient before coating with the oil/fat mixture. The ingredient is preferably heated for 120 seconds or shorter, after applying the phosphate cross-linked starch to the ingredient and before coating the ingredient with the oil/fat mixture.

## Description

### Technical Field

The present invention relates to a deep-fried food product obtained by coating a ingredient with a coating material and deep-frying the coated ingredient.

### Background Art

Deep-fried food products, such as deep-fried breaded food, *tempura,* and *karaage,* are obtained by applying a coating material to a ingredient and deep-frying the coated ingredient.

A problem with conventional coatings of deep-fried food products is that their texture, specifically crispiness, deteriorates over time after deep-frying.

In order to prevent the deterioration of coatings over time after deep-frying, improved techniques for methods for forming a coating are known.

Patent Literature 1 discloses a deep-fried food product including a ingredient, a coating provided on the ingredient, and a barrier layer coating the ingredient and provided between the ingredient and the coating, wherein the barrier layer contains an oil-absorptive material and an oil/fat and exhibits non-fluidity at 40°C, and the oil-absorptive material is one or more materials selected from the group consisting of dietary fibers, proteins, and dry bread crumbs.

Patent Literature 2 discloses a deep-fried food product obtained by coating a ingredient with a cooking oil in a liquid form at normal temperature, applying a dredging flour to the oil-coated ingredient, then applying a coating material thereto, and deep-frying the resulting ingredient, wherein the dredging flour is composed mainly of an ungelatinized flour and has a protein content of 10 to 70 mass% and a starch content of 30 to 90 mass%.

### Citation List

### Patent Literature

Patent Literature 1: WO 2007/013314
Patent Literature 2: JP 2007-143513A

### Summary of Invention

However, Patent Literature 1 and Patent Literature 2 do not sufficiently examine the effect of maintaining both the juiciness of the ingredient and the good crispy texture of the coating even a while after deep-frying. For example, the inventors of the present invention have found that, when the ingredient is simply coated with liquid oil as in Patent Literature 2, the resulting product fails to exhibit sufficiently the effect of maintaining the good crispy texture of the coating and also maintaining the juiciness of the ingredient even a while after deep-frying.

Therefore, the present invention aims to address the problems of the conventional techniques. Thus, an object thereof is to provide a deep-fried food product of which deterioration in texture is suppressed even a while after deep-frying, and specifically, to provide a deep-fried food product having a coating that maintains its good crispy texture and a ingredient that maintains its juiciness even a while after deep-frying. Particularly, it is desirable to provide a deep-fried food product that can maintain the good crispy texture of its coating and also maintain the juiciness of its ingredient, after storage at normal temperature, after refrigerated storage followed by microwaving, and after frozen storage followed by microwaving.

As a result of in-depth research, the inventors of the present invention have found that the above-described problems can be solved by interposing, between a ingredient and a coating material, a specific oil/fat mixture obtained by mixing a powdered oil/fat and a liquid oil.

The present invention is based on the above finding and provides a deep-fried food product obtained by
coating a ingredient with an oil/fat mixture and
then applying a coating material to the ingredient,
   wherein the oil/fat mixture comprises
an oil/fat in a liquid form at normal temperature
and a powdered oil/fat having a slip melting point of 40°C or higher, and
   the oil/fat mixture exhibits fluidity at normal temperature.

The present invention also provides a deep-fried food product including:
a ingredient;
a coating material coating the ingredient; and
an oil/fat mixture provided between the ingredient and the coating material and coating the ingredient,
   wherein the oil/fat mixture contains an oil/fat in a liquid form at normal temperature and a powdered oil/fat having a slip melting point of 40°C or higher, and
   the oil/fat mixture exhibits fluidity at normal temperature.

In the oil/fat mixture, the proportion of the powdered oil/fat mixed is preferably 1 mass% or more and 30 mass% or less relative to the oil/fat in a liquid form at normal temperature.

Preferably, phosphate cross-linked starch is present between the ingredient and the oil/fat mixture.

Furthermore, the present invention also provides a method for producing a deep-fried food product, the method including the steps of:
coating a ingredient with an oil/fat mixture, wherein the oil/fat mixture contains an oil/fat in a liquid form at normal temperature and a powdered oil/fat having a slip melting point of 40°C or higher, and the oil/fat mixture exhibits fluidity at normal temperature;
then applying a coating material thereto; and
deep-frying the resulting ingredient.

Preferably, the above-described method for producing a deep-fried food product includes the steps of: applying phosphate cross-linked starch to the ingredient, then coating the ingredient with the oil/fat mixture, subsequently applying the coating material thereto, and deep-frying the resulting ingredient,
wherein the method further includes the step of heating the ingredient for 120 seconds or shorter, after applying the phosphate cross-linked starch to the ingredient and before coating the ingredient with the oil/fat mixture.

### Effect of Invention

According to the present invention, it is possible to provide a deep-fried food product of which deterioration in texture is suppressed even a while after deep-frying, and specifically, to provide a deep-fried food product having a coating that maintains its good crispy texture and a ingredient that maintains its juiciness even a whole after deep-frying. According to the present invention, it is possible to maintain the good crispy texture of the coating and simultaneously to maintain the juiciness of the ingredient, after storage at normal temperature, after refrigerated storage followed by microwaving, and after frozen storage followed by microwaving.

### Description of Embodiments

Hereinafter, the present invention will be described by way of preferred embodiments thereof.

The present invention will now be described in detail. The deep-fried food product of the present invention may be any kind of deep-fried food product produced by applying a coating material to a ingredient and deep-frying the resulting ingredient. Typical examples of the deep-fried food product include deep-fried food products whose outermost deep-fried coatings are made from a batter (e.g., *tempura,* corn dogs, fritters, etc.), various types of *karaage* (a type of *karaage* produced by using a *karaage* powder directly as a coating material and a type of *karaage* having a deep-fried coating made from a batter obtained by dissolving or dispersing a *karaage* powder in a liquid such as water), and deep-fried food products whose outermost deep-fried coatings are made from a breading such as bread crumbs or flour (so-called deep-fried breaded food, croquettes, fried cutlets, etc.).

The ingredient used for the deep-fried food product of the present invention is not particularly limited, and may be any ingredient conventionally used for a deep-fried food product obtained by applying a coating material thereto and then deep-frying the ingredient. Examples of the ingredients that can be used for the deep-fried food product of the present invention include fish and shellfish; various types of meat; vegetables, which herein encompass potatoes, beans, mushrooms, etc.; eggs such as boiled eggs; dairy products such as cheese; processed food or semi-finished products made from one or more thereof (e.g., sausages, ham, various croquette ingredients, *chikuwa* (a kind of Japanese fishcake in a tubular form), *kamaboko* (another kind of Japanese fishcake, typically in a semicylindrical shape), fish portions, etc.). These ingredients to be used may be unheated (raw), or have been heated.

Next, the oil/fat mixture for coating the ingredient will be described. In the present invention, the oil/fat mixture used contains an oil/fat in a liquid form at normal temperature and a powdered oil/fat having a slip melting point of 40°C or higher and exhibits fluidity at normal temperature.

First, the oil/fat in a liquid form at normal temperature contained in the oil/fat mixture will be described.

The oil/fat in a liquid form at normal temperature is an oil/fat that is liquid at 25°C, and is hereinafter also referred to as "liquid oil". Examples of the liquid oil include salad oil, olive oil, sesame oil, cottonseed oil, soybean oil, rapeseed oil, rice oil, corn oil, peanut oil, safflower oil, sunflower oil, coconut oil, avocado oil, oils obtained by subjecting any of these oils to processing such as fractionation or transesterification, fractionated oils from solid oils/fats such as soft oil fractionated from palm oil, a medium-chain fatty acid-based oil (e.g., "Econa" manufactured by Kao Corporation), "Fry Up 393" manufactured by J-Oil Mills, Inc., and "ZENOA" manufactured by Tsukishima Foods Industry Co., Ltd.. These cooking oils may be used singly or in combinations of two or more thereof.

Among the above liquid oils, an oil/fat in a liquid form at 20°C is preferable, and it is particularly preferable to use an oil/fat in a liquid form at 15°C. Especially, it is particularly preferable to use rapeseed oil in terms of taste. As the rapeseed oil, "Canola" manufactured by the Nisshin OilliO Group, Ltd. may be used, for example.

Next, the powdered oil/fat having a slip melting point of 40°C or higher will be described. The powdered oil/fat may be, for example, a powdered oil/fat obtained by spray drying an emulsion (an O/W emulsion or a W/O emulsion, and in particular, an O/W emulsion) obtained by emulsifying an oil/fat in a liquid form or solid at normal temperature, an emulsifier, and optionally an excipient (such as carbohydrate or protein), with water; a powdered oil/fat obtained by mixing an oil/fat with an excipient to adsorb the oil/fat onto the excipient to thereby form a powder; a powdered oil/fat obtained by mixing an oil/fat and an emulsifier with an excipient to adsorb them onto the excipient to thereby form a powder; or a granulated product of any of these powdered oils/fats.

The slip melting point of the powdered oil/fat is 40°C or higher. Mixing the powdered oil/fat having such a melting point with a liquid oil to form an oil/fat mixture that has fluidity at normal temperature can lead to both a juicy texture of the ingredient and a crispy texture of the coating. In the present invention, it is not clear why the above-described effect can be obtained by combining a powdered oil/fat having a slip melting point of 40°C or higher with a liquid oil, but the inventors of the present invention have presumed that the powdered oil/fat having a slip melting point of 40°C or higher strengthens a film of the liquid oil, which results in a juicy texture of the ingredient and a crispy texture of the coating. The powdered oil/fat preferably has a slip melting point of 50°C or higher, in view of obtaining an even greater effect in terms of the juicy texture of the ingredient. The slip melting point of the powdered oil/fat is preferably 80°C or lower, in view of more easily achieving both a good texture of the ingredient and a good texture of the coating.

The slip melting point of the powdered oil/fat can be determined in accordance with the JOCS Standard Methods for the Analysis of Fats, Oils and Related Materials (I) (1996), Japan Oil Chemists' Society, 2.2.4.2-1996, Method for Measuring Slip Melting Point.

As the oil/fat for the powdered oil/fat, an oil/fat having a relatively high melting point is preferably used in order to ensure that the resulting powdered oil/fat has a slip melting point of 40°C or higher. Examples of such oil/fat include animal oils/fats such as beef fat and lard, vegetable oils such as palm oil, and oils/fats obtained by subjecting them to processing such as hydrogenation or fractionation of a high-melting point portion, and oils/fats obtained by subjecting liquid oils such as soybean oil, cottonseed oil, and rapeseed oil to processing such as hydrogenation. In the present invention, powdered oils/fats containing palm oil or a processed oil thereof are particularly preferable because they do not impair the flavor of deep-fried food. When the powdered oil/fat contains palm oil or a processed oil thereof, the proportion of the total of the palm oil and processed oil thereof in the powdered oil/fat is preferably 20 mass% or more, for example.

In the oil/fat mixture, the amount of the powdered oil/fat having a slip melting point of 40°C or higher is preferably 1 mass% or more and 30 mass% or less relative to the liquid oil. The powdered oil/fat in an amount of 1 mass% or more relative to the liquid oil improves the juiciness of the ingredient and the crispiness of the coating in any cases of storing the deep-fried food product at normal temperature, microwaving the deep-fried food product after refrigeration, and microwaving the deep-fried food product after freezing. The powdered oil/fat in an amount of 30 mass% or less relative to the liquid oil enhances the excellent effect of the present invention in terms of the juiciness of the ingredient and the crispiness of the coating. In view of these points, the amount of the powdered oil/fat in the oil/fat mixture is more preferably 5 mass% or more and 20 mass% or less relative to the liquid oil.

The oil/fat mixture may also contain a component other than the liquid oil or the powdered oil/fat having a slip melting point of 40°C or higher. The proportion of the total amount of the liquid oil and the powdered oil/fat having a slip melting point of 40°C or higher in the oil/fat mixture is preferably 75 mass%, and more preferably 90 mass% or more.

The oil/fat mixture having fluidity at normal temperature brings about the excellent effect of the present invention, specifically the effect of suppressing deterioration in the textures of the ingredient and the coating after a lapse of time. The reason for this is probably that the ingredient can be uniformly coated with a film of the oil/fat mixture.

Whether the oil/fat mixture has fluidity at normal temperature is preferably checked in the following manner.

### Evaluation Test for Fluidity

First, 5 mL of an oil/fat mixture to be evaluated is filled into a stainless steel container having a cylindrical interior space with an inner diameter at the bottom of 20 mm and a height of 20 mm. The container is sealed with a stainless steel lid, and allowed to stand for 1 hour under a condition of a temperature of 60°C. The container is then placed in an environment at 25°C, and allowed to stand for 3 hours. Then, the container is tilted so that the bottom surface of the container is inclined at 30° with respect to a horizontal plane in a side view, and if an outflow of the oil/fat mixture from the container can be found within 1 minute after the tilting, it is determined that the oil/fat mixture exhibits fluidity at normal temperature.

The oil/fat mixture does not necessarily need to coat the entire surface of the ingredient, and may coat a portion of the surface. As for the amount of the oil/fat mixture applied to the surface of the ingredient, the amount of the oil/fat mixture applied is preferably 1 to 10 parts by mass per 100 parts by mass of the ingredient (the net amount of the ingredient, excluding components that are applied to the surface through water retention treatment and others, which will be described later), in view of increasing the coverage of the surface of the ingredient with the oil/fat mixture to enhance the effect of the present invention and also ensuring a well-balanced ratio between the ingredient and the coating, and the amount of the oil/fat mixture is more preferably 2.5 to 7.5 parts by mass. The term "the entire surface" as used herein means that it can be visually confirmed that the oil/fat mixture is applied to substantially the entire surface of the ingredient in appearance, and it is acceptable that there is a small area that remains uncoated.

The ingredient can be also subjected to water retention treatment with starch, or particularly preferably phosphate cross-linked starch, before the ingredient is coated with the oil/fat mixture. The "water retention treatment" here refers to a treatment involving application of a starch suspension in water to the ingredient. The suspension to be used is preferably one obtained by suspending 4 to 60 parts by mass, or more preferably 12 to 40 parts by mass, of the starch in 100 parts by mass of water. Application of the starch, or particularly preferably phosphate cross-linked starch, to the ingredient before coating the ingredient with the oil/fat mixture brings about the effect of achieving both the water retention effect and the crispy texture due to the starch, and thus, the texture of the ingredient and the texture of the coating can be particularly effectively maintained even a while after deep-frying.

In general, examples of the starch that can be used for water retention treatment include potato starch, tapioca starch, sweet potato starch, corn starch, waxy corn starch, wheat starch, and rice starch, and also modified starches obtained by subjecting any of these starches to modification such as oxidation, acid treatment, acetylation, hydroxypropylation, etherification, crosslinking (crosslinking with phosphoric acid or crosslinking with adipic acid), and pregelatinization. Crosslinked starch is preferably used in view of the excellent effect of suppressing deterioration in both the texture of the ingredient and the texture of the coating, and phosphate cross-linked starch is particularly preferably used. The "phosphate cross-linked starch" here also encompasses starches that have undergone crosslinking treatment with phosphoric acid and also treatment other than the crosslinking treatment, including acetylated phosphate cross-linked starch, hydroxypropylated phosphate cross-linked starch, and phosphated phosphate cross-linked starch.

There is no particular limitation on the amount of starch used for the water retention treatment. For example, the amount of starch applied to the ingredient is preferably 0.1 to 5 parts by mass, or more preferably 1 to 2.5 parts by mass, per 100 parts by mass of the ingredient (the net amount of the ingredient, excluding components that are applied to the ingredient through pretreatment such as marination) in view of achieving a suitable degree of the coverage of the surface of the ingredient with the starch to thereby enhance the effect of the present invention.

After the water retention treatment described above and before coating with the oil/fat mixture, the ingredient to which the starch has been applied is preferably heated for a short time, or specifically for 120 seconds or shorter. This heat treatment hardens the surface of the ingredient to further reduce water migration from the ingredient to the coating material during and after deep-frying, thereby exhibiting the excellent effect of preventing deterioration in the texture of the ingredient and the texture of the coating a while after deep-frying. In particular, when the ingredient with phosphate cross-linked starch applied thereto is heated, a film of gelatinized starch is formed, which advantageously achieves a crispy texture and a reduction of water migration at the same time. In view of these, the heating time is preferably 10 seconds or longer, particularly preferably 30 seconds or longer, and even more preferably 45 seconds or longer and 100 seconds or shorter.

The heat treatment is preferably performed by at least one selected from steaming, heating in an oven, and deep-frying, and steaming is more preferable. The term "steaming" here includes heating with superheated steam and heating with steam other than superheated steam, and means treatment involving exposure of the ingredient to high-temperature steam. Examples of heating with steam include heating in a steam oven, heating in a superheated steam cooker (continuous type or batch type), and heating in a steamer. Heating with steam may be cooking in a pressure cooker, but is preferably heating under normal pressure.

Heating in an oven may be heating with a hot air flow, far infrared radiation, or infrared radiation, for example. Deep-frying may be heating in hot oil. Examples of the oven include a toaster oven, a roaster oven, a jet oven, and a convection oven. A steam oven, which serves as a combination of heating with steam and heating in an oven, can also be used.

For example, in cases where a steam oven is used, it can be said that heating with steam is performed, when steam is the main heat source, and it can be said that oven heating is performed, when a hot air flow, far-infrared radiation, or infrared radiation is the main heat source. Which is the main heat sources is distinguished in terms of the magnitude of heat applied.

The temperature of the heat treatment is preferably 100°C or higher and 180°C or lower. When the temperature of the heat treatment is 100°C or higher, the favorable effect of maintaining crispiness a while after deep-frying can be obtained. When the temperature of the heat treatment is 180°C or lower, favorable juiciness of the ingredient can be obtained. In view of these, the temperature of the heat treatment is more preferably 120°C or higher and 170°C or lower. The above-described temperature means the temperature inside the oven in the case of oven heating, or the temperature of steam in the case of heating with steam, or the oil temperature in the case of deep-frying.

Next, the coating material for coating the ingredient coated with the oil/fat mixture will be described.

As the coating material, a batter (a liquid coating material obtained by dissolving or dispersing flour and others in a liquid), or a combination of such a batter with a breading to be applied thereon, such as bread crumbs, can be generally used. Alternatively, a powder such as a *karaage* powder may be directly used as the coating material without using a batter.

When a dredging flour is applied to the ingredient coated with the oil/fat mixture before the batter or breading is applied, the dredging flour can also be regarded as the coating material.

There is no particular limitation on the type and composition of the batter, and it is possible to use a batter conventionally used in the production of *tempura, karaage,* various types of deep-fried breaded food (fried chickens, deep-fried breaded food, croquettes, fried cutlets, etc.).

The batter may include, for example, a flour component as the main component of the solid content (e.g., in an amount of 60 mass% or 70 mass% or more of the solid content). The batter can be prepared by optionally adding, to the flour component, one or more of a protein material, an emulsifier, a saccharide component, a leavening agent, a thickener, a colorant, a spice, a seasoning, and others, adding a liquid component thereto, and dissolving or dispersing it in the liquid component. However, the method for preparing the batter is not limited to the above. The flour component may include cereal flour and starch. Examples of the cereal flour include wheat flour, rice flour, rye flour, barley flour, oat flour, pearl barley flour, adlay flour, buckwheat flour, corn flour, sorghum flour, and bean flour. Examples of the starch include potato starch, wheat starch, corn starch, tapioca starch, and rice starch and also modified starches thereof. Examples of the liquid component include water, a seasoning liquid, liquid egg, a liquid oil, and milk.

Generally, the amount of the liquid component used for preparing the batter is preferably about 50 to 300 parts by mass, or particularly preferably about 100 to 250 parts by mass, per 100 parts by mass of the solid content including the flour component, in view of handleability of the batter, adhesion of the batter to the ingredient with the oil/fat mixture applied, and the appearance and texture of the deep-fried coating.

In cases where an emulsifier is added to the batter, any emulsifier usable for food products can be used. Examples thereof include lecithin, glycerin fatty acid ester, sucrose fatty acid ester, and sorbitan fatty acid ester, and one or more of these can be used.

There is no particular limitation on the method for applying the batter to the ingredient, and generally, the method includes coating the ingredient with the oil/fat mixture, applying a dredging flour thereto, and immersing the resulting ingredient in the batter to apply the batter to the ingredient. In some cases, the batter may be applied to the surface of the flour-dredged ingredient by brushing, sprinkling, or the like. The dredging flour is usually a powder mainly composed of a flour component, and the proportion of the flour component may be 60 mass% or more, 70 mass% or more, or even 90 mass% or more. As the flour component of the dredging flour, the flour component as described above for using for the batter can be used. The batter may be applied to the ingredient manually, or automatically using a machine.

After the batter as the coating material is applied to the ingredient, a breading, such as bread crumbs, may also be applied to the batter on the ingredient, followed by deep-frying the resultant to produce the deep-fried food product of the present invention. Examples of the breading used in that case include a flour component, bread crumbs, crackers, coarsely ground products of cereal flakes such as corn flakes, coarsely ground nuts, sesame, and coarsely ground products of bean-starch noodles, rice vermicelli, etc. When bread crumbs are used, any of soft or fresh bread crumbs, semi-dry bread crumbs, and dry bread crumbs can be used. Furthermore, the breading may contain an emulsifier or baking powder. As the flour component, those mentioned above as examples of the flour component of the batter can be used. Usually, the breading is mainly composed of a coarsely ground product of cereal flakes and/or a flour component. The total amount of the coarsely ground product of cereal flakes and/or the flour component in the breading may be 60 mass% or more, 70 mass% or more, or even 90 mass% or more. In cases where the breading is applied before deep-frying as well, various types of deep-fried breaded food (fried chickens, deep-fried breaded food, croquettes, fried cutlets, etc.) can be produced by deep-frying the resulting ingredient in a deep-frying oil at a deep-frying temperature as in cases where the ingredient coated with the batter is deep-fried as is.

There is no particular limitation on the oil used for deep-frying, and any oil conventionally used for producing deep-fried food products can be used, including various vegetable cooking oils, animal oils/fats such as lard and beef fat, and mixtures thereof .

The temperature of the deep-frying oil during deep-frying is not particularly limited as well, and an appropriate temperature can be selected according to the types of the ingredient and the coating and the type of the deep-frying oil. Generally, the temperature of the oil is about 140°C to 200°C. However, the present invention is characterized in that the ingredient is coated with a cooking oil and that the cooking oil is immobilized with a dredging flour; and accordingly, even when heavy deep-frying conditions than usual are adopted, leakage of a component of the ingredient into the deep-frying oil and excessive evaporation of water from the ingredient can be prevented, and furthermore, water in the coating can be evaporated well.

According to the above-described process, a deep-fried food product is obtained that includes a ingredient, a coating material coating the ingredient, and an oil/fat mixture provided between the ingredient and the coating material and coating the ingredient,
wherein the oil/fat mixture contains an oil/fat in a liquid form at normal temperature (25°C) and a powdered oil/fat having a slip melting point of 40°C or higher, and the oil/fat mixture exhibits fluidity at normal temperature (25°C).

The deep-fried food product of the present invention is particularly suitable for cases where a deep-fried food product is distributed and sold in a non-frozen state (at normal temperature, or at a refrigeration or chilled temperature of about 0°C to 10°C), or stored in such a state. However, the present invention is not limited thereto, and in some cases, the deep-fried food product may be frozen, and then stored, distributed, and sold as a frozen deep-fried food product.

It should be noted that even if the present specification contains a description that expresses a product defined by a manufacturing process of the product, to identify or characterize a detailed structure of the deep-fried food beyond the description in the present specification requires new analytical means, and is therefore impossible or impractical under such circumstances.

### Examples

Hereinafter, the present invention will be described by way of Examples, but the present invention is not limited to Examples given below. Powdered oils/fats used in Examples and Comparative Examples were all obtained by emulsifying an oil/fat with an emulsifier into an oil-in-water type (O/W type) emulsion and then spray-drying the emulsion.

### Control Example

### Preparation of Batter

A batter was prepared by dissolving/dispersing 100 g of a composition for preparing batter in a liquid mixture composed of 20 g of soybean white oil and 200 ml of water, the composition containing 78.5 mass% of a modified starch (trade name "Nisshoku Batter Starch #200N" available from Nihon Shokuhin Kako Co., Ltd.), 20 mass% of wheat flour (soft wheat flour, trade name "Flower" available from Nisshin Flour Milling Inc.), 1 mass% of an emulsifier (glyceryl monostearate, trade name "EXCEL S-95" available from Kao Corporation), and 0.5 mass% of a thickener (guar gum, trade name "Guarpak" available from DSP Gokyo Food & Chemical Co., Ltd.).

### Preparation of Breading Mix

A breading mix was prepared by mixing 65 mass% of wheat flour (soft wheat flour, trade name "Flour" available from Nisshin Flour Milling Inc.), 33 mass% of a modified starch (trade name "Nisshoku Batter Starch #200N" available from Nihon Shokuhin Kako Co., Ltd.), 1 mass% of an emulsifier (glyceryl monostearate, trade name "EXCEL S-95" available from Kao Corporation), and 1 mass% of baking powder (trade name "Baking Powder FS" available from Oriental Yeast Co., Ltd.).

### Production of Fried Chicken

A plurality of cut pieces of chicken thigh, each weighing 80 g, were provided as a ingredient. The pieces of chicken thigh were marinated, and then, a suspension prepared by suspending 5 parts by mass of unmodified tapioca starch in 20 parts by mass of water was applied to the surface of each of the pieces of chicken thigh for a water retention treatment. The amount of the unmodified tapioca starch applied was 2 parts by mass per 100 parts by mass of chicken thigh (the mass before marination, water retention treatment, and surface hardening treatment).

Next, the pieces of chicken thigh were heated by steaming at 140°C (heated with superheated steam at 140°C) for 100 seconds using a steam oven as a heating device, to thereby harden the surface of the pieces of chicken thigh.

Next, the pieces of chicken thigh after surface hardening were mixed with rapeseed oil to coat the entire surface of each of the pieces of chicken thigh with the rapeseed oil. The amount of rapeseed oil applied was 5 parts by mass per 100 parts by mass of chicken thigh (the mass before marination, water retention treatment, and surface hardening treatment). The pieces of chicken thigh with the rapeseed oil applied thereto was dredged with a modified starch (trade name "Nisshoku Batter Starch #200N" available from Nihon Shokuhin Kako Co., Ltd.). The resulting pieces of chicken thigh were further immersed in the above-described batter, and then, the above-described breading mix was applied to the entire surface of each of the pieces. The pieces of chicken thigh prepared in this manner were deep-fried in cooking oil at a temperature of 175°C for 2 minutes, allowed to rest for 1 minute, and then deep-fried again in cooking oil at a temperature of 175°C for another 2 minutes, to thereby obtain fried chicken.

### Example 1

Fried chicken was produced in the same manner as in Control Example, except that, instead of 5 parts by mass of rapeseed oil used in Control Example, 5 parts by mass of an oil/fat mixture was used, the oil/fat mixture being obtained by mixing rapeseed oil and a powdered oil/fat so that the proportion of the powdered oil/fat mixed was 15 mass% relative to the rapeseed oil, as shown in Table 2. The powdered oil/fat had a slip melting point of 40°C, and the proportion of a hydrogenated palm oil/fat in the oil/fat was 100 mass%. Whether or not the oil/fat mixture had fluidity at normal temperature (25°C) was determined by performing the evaluation test described above, and the results were shown in the table below.

The texture of the produced fried chicken was evaluated in the following manner. The panelists shared in advance a common perception for the evaluation scores and textures.

(i) The produced fried chicken was allowed to stand at room temperature (25°C) for 4 hours after deep-frying, and then, ten panelists ate the fried chicken and gave evaluation scores according to the evaluation criteria shown in Table 1. The averages of the all evaluation scores given by the panelists were calculated. The evaluation results were as shown in Table 2.
(ii) The produced fried chicken (other pieces different from those used for (i)) was cooled by allowing the fried chicken to stand at room temperature (25°C) for 30 minutes after deep-frying, and then stored in a refrigerator (at a temperature of 5°C) for 24 hours. After that, the fried chicken was removed from the refrigerator and heated (heating time 30 s/piece) in a microwave (600 W), and then, the ten panelists ate the fried chicken and gave evaluation scores according to the evaluation criteria shown in Table 1. The averages of the all evaluation scores given by the panelists were calculated. The evaluation results were as shown in Table 2.
(iii) The produced fried chicken (other pieces different from those used for (i) or (ii)) was cooled by allowing that fried chicken to stand at room temperature (25°C) for 30 minutes after deep-frying, and then stored in a freezer (at a temperature of -20°C) for 24 hours. After that, the fried chicken was removed from the freezer and heated (heating time 180 s/piece) in a microwave (600 W), and then, the ten panelists ate the fried chicken and gave evaluation scores according to the evaluation criteria shown in Table 1. The averages of the all evaluation scores given by the panelists were calculated. The evaluation results were as shown in Table 2.

**Table 1**

| | Texture of ingredient (juiciness) | Texture of coating (crispiness) |
|---|---|---|
| 5 points | Much juicier than control example. | Much crispier than control example. |
| 4 points | Juicier than control example. | Crispier than control example. |
| 3 points | As juicy as control example. | As crispy as control example. |
| 2 points | Drier and less juicy than control example. | Stickier and less crispy than control example. |
| 1 point | Much drier than control example and not juicy at all. | Much Stickier than control example and not crispy at all. |

### Examples 2 to 6 and Comparative Examples 1 and 2

Fried chicken was produced in the same manner as in Example 1, except that the oil/fat in a liquid form at room temperature and/or the powdered oil/fat, which were used for the preparation of the oil/fat mixture, was changed to those shown in Table 2. The evaluation results of the texture of the produced fried chicken were as shown in Table 2.

In Examples 2 and 3, the cooking procedure was the same as in Example 1, except that the rapeseed oil used as the oil/fat in a liquid form at normal temperature was changed to those shown in Table 2.

In Example 4, the cooking procedure was the same as in Example 1, except that the powdered oil/fat used was that having a slip melting point of 50°C and having a proportion of a hydrogenated palm oil/fat of 100 mass% in the oil/fat.

In Example 5, the cooking procedure was the same as in Example 1, except that the powdered oil/fat used was that having a slip melting point of 60°C and having a proportion of a hydrogenated palm oil/fat of 100 mass% in the oil/fat.

In Example 6, the cooking procedure was the same as in Example 1, except that the powdered oil/fat used was that having a slip melting point of 40°C and having a proportion of a hydrogenated soybean oil/fat of 100 mass% in the oil/fat.

In Comparative Example 1, the cooking procedure was the same as in Example 1, except that a hydrogenated palm oil/fat (slip melting point: 35°C), which was solid at normal temperature, was used instead of the oil/fat in a liquid form at normal temperature, and that this oil/fat was mixed with the powdered oil/fat to prepare an oil/fat mixture.

In Comparative Example 2, the cooking procedure was the same as in Example 1, except that the powdered oil/fat used was that having a slip melting point of 30°C and having a proportion of palm oil of 99 mass% in the oil/fat (product name: Magic Fat 210, available from Miyoshi Oil & Fat Co., Ltd.).

### Examples 7 to 11

Fried chicken was produced in the same manner as in Example 1, except that the proportion of the powdered oil/fat mixed was changed to those shown in Table 3. The evaluation results of the texture of the produced fried chicken were as shown in Table 3. Table 3 shows the composition and the evaluation results of Example 1 again.

### Examples 12 to 17

Fried chicken was produced in the same manner as in Example 1, except that starches shown in Table 4 were used, instead of the unmodified tapioca starch, to be suspended in water for the water retention treatment. The evaluation results of the texture of the produced fried chicken were as shown in Table 4.

### Examples 18 to 27

Fried chicken was produced in the same manner as in Example 12, except that the method, temperature, and time of heating after the water retention treatment were changed to those shown in Table 5. The evaluation results of the texture of the produced fried chicken were as shown in Table 5.

**Table 2**

| | | Control Ex. | Ex. 1 | Ex. 2 | Ex. 3 | Ex. 4 | Ex. 5 | Ex. 6 | Com. Ex. 1 | Com. Ex. 2 |
|---|---|---|---|---|---|---|---|---|---|---|
| Oil/fat in liquid form at normal temperature (except for Com. Ex. 1) | | Rapeseed oil | Rapeseed oil | Soybean white oil | Olive oil | Rapeseed oil | Rapeseed oil | Rapeseed oil | Palm oil | Rapeseed oil |
| Powdered oil/fat mixed | Type | - | Palm | Palm | Palm | Palm | Palm | Soybean | Palm | Palm |
| | Slip melting point (°C) | - | 40 | 40 | 40 | 50 | 60 | 40 | 40 | 30 |
| | Proportion (mass%) | - | 15 | 15 | 15 | 15 | 15 | 15 | 15 | 15 |
| Fluidity of oil/fat mixture | | Yes | Yes | Yes | Yes | Yes | Yes | Yes | No | Yes |
| After a lapse of time at normal temperature | Texture of ingredient (juiciness) | 3 | 4.1 | 4.2 | 4.3 | 4.5 | 4.7 | 4.1 | 3.1 | 3.1 |
| | Texture of coating (crispiness) | 3 | 4.6 | 4.4 | 4.3 | 4.2 | 4.1 | 4.7 | 2.7 | 3.2 |
| After refrigerated storage followed by microwaving | Texture of ingredient (juiciness) | 3 | 4.2 | 4.2 | 4.4 | 4.5 | 4.7 | 4.2 | 3.2 | 3.2 |
| | Texture of coating (crispiness) | 3 | 4.8 | 4.5 | 4.5 | 4.4 | 4.3 | 4.8 | 2.6 | 3.3 |
| After frozen storage followed by microwaving | Texture of ingredient (juiciness) | 3 | 4.1 | 4.2 | 4.3 | 4.4 | 4.4 | 4.1 | 3.0 | 3.1 |
| | Texture of coating (crispiness) | 3 | 4.5 | 4.4 | 4.3 | 4.1 | 4.0 | 4.5 | 2.5 | 3.0 |

As can be seen from the evaluation results of Examples shown in Table 2, when a ingredient is coated with an oil/fat mixture containing an oil/fat in a liquid form at normal temperature and a powdered oil/fat having a slip melting point of 40°C or higher and exhibiting fluidity at normal temperature, then applying a coating material thereto, and deep-frying the resulting ingredient, a good crispy texture of the coating and a good juicy texture of the ingredients are obtained in any of the cases after a lapse of time at normal temperature, after refrigerated storage followed by microwaving, and after frozen storage followed by microwaving.

In contrast, in Comparative Example 1, in which a mixture of an oil/fat that is solid at normal temperature and a powdered oil/fat was used as the oil/fat mixture, and in Comparative Example 2, in which a mixture of an oil/fat in a liquid form at normal temperature and a powdered oil/fat having a slip melting point of less than 40°C was used as the oil/fat mixture, the texture were much poorer after a lapse of time at normal temperature, after refrigerated storage followed by microwaving, and after frozen storage followed by microwaving.

**Table 3**

| | | Ex. 7 | Ex. 8 | Ex. 1 | Ex. 9 | Ex. 10 | Ex. 11 |
|---|---|---|---|---|---|---|---|
| Oil/fat in liquid form at normal temperature | | Rapeseed oil | Rapeseed oil | Rapeseed oil | Rapeseed oil | Rapeseed oil | Rapeseed oil |
| Powdered oil/fat mixed | Type | Palm | Palm | Palm | Palm | Palm | Palm |
| | Slip melting point (°C) | 40 | 40 | 40 | 40 | 40 | 40 |
| | Proportion (mass%) | 1 | 5 | 15 | 25 | 30 | 35 |
| Fluidity of oil/fat mixture | | Yes | Yes | Yes | Yes | Yes | Yes |
| After a lapse of time at normal temperature | Texture of ingredient (juiciness) | 4.1 | 4.0 | 4.1 | 4.2 | 4.2 | 3.7 |
| | Texture of coating (crispiness) | 4.1 | 4.3 | 4.6 | 4.4 | 4.2 | 3.5 |
| After refrigerated storage followed by microwaving | Texture of ingredient (juiciness) | 4.2 | 4.1 | 4.2 | 4.3 | 4.2 | 3.8 |
| | Texture of coating (crispiness) | 4.2 | 4.2 | 4.8 | 4.4 | 4.2 | 3.7 |
| After frozen storage followed by microwaving | Texture of ingredient (juiciness) | 4.1 | 4.2 | 4.1 | 4.2 | 4.3 | 3.5 |
| | Texture of coating (crispiness) | 4.0 | 4.2 | 4.5 | 4.3 | 4.1 | 3.6 |

As shown in Table 3, there is a preferable proportion of the amount of the powdered oil/fat added relative to the liquid oil in the oil/fat mixture, the preferable proportion resulting in the particularly excellent effect of improving the texture.

**Table 4**

| | | Ex. 12 | Ex. 13 | Ex. 14 | Ex. 15 | Ex. 16 | Ex. 17 |
|---|---|---|---|---|---|---|---|
| Starch used for water retention treatment | Source material | Tapioca | Potato | Wheat | Tapioca | Tapioca | Tapioca |
| | Type of modification | Crosslinking with phosphoric acid | Crosslinking with phosphoric acid | Crosslinking with phosphoric acid | Pregelatinization | Acetylation | Oxidation |
| Oil/fat in liquid form at normal temperature | | Rapeseed oil | Rapeseed oil | Rapeseed oil | Rapeseed oil | Rapeseed oil | Rapeseed oil |
| Powdered oil/fat mixed | Type | Palm | Palm | Palm | Palm | Palm | Palm |
| | Slip melting point (°C) | 40 | 40 | 40 | 40 | 40 | 40 |
| | Proportion (mass%) | 15 | 15 | 15 | 15 | 15 | 15 |
| After a lapse of time at normal temperature | Texture of ingredient (juiciness) | 4.2 | 4.2 | 4.2 | 4.1 | 4.0 | 3.5 |
| | Texture of coating (crispiness) | 4.7 | 4.7 | 4.8 | 3.5 | 3.4 | 4.2 |
| After refrigerated storage followed by microwaving | Texture of ingredient (juiciness) | 4.3 | 4.2 | 4.2 | 4.0 | 4.1 | 3.4 |
| | Texture of coating (crispiness) | 4.9 | 4.8 | 4.9 | 3.6 | 3.4 | 4.1 |
| After frozen storage followed by microwaving | Texture of ingredient (juiciness) | 4.2 | 4.2 | 4.1 | 3.8 | 4.0 | 3.2 |
| | Texture of coating (crispiness) | 4.6 | 4.6 | 4.7 | 3.5 | 3.4 | 3.7 |

The tapioca phosphate cross-linked starch used in Example 12 was "Pine Bake CC" available from Matsutani Chemical Industry Co., Ltd.

The potato phosphate cross-linked starch used in Example 13 was "Seikaku" available from KMC.

The wheat phosphate cross-linked starch used in Example 14 was "MIDSOL 1" available from MGP INGREDIENTS.

The pregelatinized tapioca starch used in Example 15 was "Tapioca alpha TP-2" available from Sanwa Starch Co., Ltd.

The acetylated tapioca starch used in Example 16 was "CHEMISTAR 220" available from Glico Nutrition Co., Ltd.

The oxidized tapioca starch used in Example 17 was "SP-3" available from J-Oil Mills, Inc.

As shown in Table 4, the use of phosphate cross-linked starch, in particular, in the water retention treatment before coating with an oil/fat mixture results in the particularly excellent effect of improving the texture.

**Table 5**

| | | Ex. 18 | Ex. 19 | Ex. 20 | Ex. 21 | Ex. 22 | Ex. 23 | Ex. 24 | Ex. 25 | Ex. 26 | Ex. 27 |
|---|---|---|---|---|---|---|---|---|---|---|---|
| Starch used for water retention treatment | Source material | Tapioca | Tapioca | Tapioca | Tapioca | Tapioca | Tapioca | Tapioca | Tapioca | Tapioca | Tapioca |
| | Type of modification | Crosslinkin g with phosphoric acid | Crosslinkin g with phosphoric acid | Crosslinkin g with phosphoric acid | Crosslinkin g with phosphoric acid | Crosslinkin g with phosphoric acid | Crosslinkin g with phosphoric acid | Crosslinkin g with phosphoric acid | Crosslinkin g with phosphoric acid | Crosslinkin g with phosphoric acid | Crosslinkin g with phosphoric acid |
| Heat treatment | Heating method | Steam | Steam | Steam | Steam | Steam | Deep-fry | Oven | Steam | Steam | Steam |
| | Heating temperature (°C) | 140 | 140 | 140 | 100 | 180 | 140 | 140 | 140 | 90 | 190 |
| | Heating time (s) | 60 | 10 | 120 | 60 | 60 | 60 | 60 | 150 | 60 | 60 |
| Oil/fat in liquid form at normal temperature | | Rapeseed oil | Rapeseed oil | Rapeseed oil | Rapeseed oil | Rapeseed oil | Rapeseed oil | Rapeseed oil | Rapeseed oil | Rapeseed oil | Rapeseed oil |
| Powdered oil/fat mixed | Type | Palm | Palm | Palm | Palm | Palm | Palm | Palm | Palm | Palm | Palm |
| | Slip melting point (°C) | 40 | 40 | 40 | 40 | 40 | 40 | 40 | 40 | 40 | 40 |
| | Proportion (mass%) | 15 | 15 | 15 | 15 | 15 | 15 | 15 | 15 | 15 | 15 |
| After a lapse of time at normal temperature | Texture of ingredient (juiciness) | 4.4 | 4.2 | 4.1 | 4.3 | 4.2 | 4.3 | 4.3 | 3.5 | 4.0 | 3.3 |
| | Texture of coating (crispiness) | 4.8 | 4.5 | 4.3 | 4.2 | 4.6 | 4.8 | 4.8 | 4.1 | 3.7 | 4.1 |
| After refrigerated storage followed by microwaving | Texture of ingredient (juiciness) | 4.4 | 4.3 | 4.2 | 4.3 | 4.3 | 4.3 | 4.3 | 3.6 | 4.1 | 3.4 |
| | Texture of coating (crispiness) | 4.9 | 4.4 | 4.4 | 4.3 | 4.5 | 4.9 | 4.9 | 4.2 | 3.8 | 4.2 |
| After frozen storage followed by microwaving | Texture of ingredient (juiciness) | 4.3 | 4.1 | 4.0 | 4.2 | 4.2 | 4.2 | 4.2 | 3.3 | 3.9 | 3.2 |
| | Texture of coating (crispiness) | 4.7 | 4.3 | 4.4 | 4.1 | 4.3 | 4.7 | 4.7 | 3.9 | 3.6 | 3.9 |

"Oven" indicated in Table 5 means that the ingredient after the water retention treatment with starch was heated in a convection oven at the heating temperature shown in Table 5 for the heating time shown in Table 5.

"Deep-fry" indicated in Table 5 means that the ingredient after the water retention treatment with starch was deep-fried by placing the ingredient in a deep-frying oil adjusted to the heating temperature shown in Table 5 for the time period shown in Table 5.

As shown in Table 5, the excellent effect of improving the texture was obtained by performing heat treatment at 100°C or higher and 180°C or lower for 120 seconds or shorter before the water retention treatment and before the coating with the oil/fat mixture.

## Claims

1. A deep-fried food product obtained by
coating a ingredient with an oil/fat mixture and
then applying a coating material to the ingredient,
wherein the oil/fat mixture comprises
an oil/fat in a liquid form at normal temperature
and a powdered oil/fat having a slip melting point of 40°C or higher, and
the oil/fat mixture exhibits fluidity at normal temperature.

2. The deep-fried food product according to claim 1, wherein in the oil/fat mixture, a proportion of the powdered oil/fat mixed is 1 mass% or more and 30 mass% or less relative to the oil/fat in a liquid form at normal temperature.

3. The deep-fried food product according to claim 1 or 2, wherein phosphate cross-linked starch is applied to the ingredient before coating with the oil/fat mixture.

4. A method for producing a deep-fried food product, the method comprising the steps of:
applying phosphate cross-linked starch to a ingredient,
then coating the ingredient with an oil/fat mixture, wherein the oil/fat mixture comprises an oil/fat in a liquid form at normal temperature and a powdered oil/fat having a slip melting point of 40°C or higher, and the oil/fat mixture exhibits fluidity at normal temperature,
then applying a coating material to the ingredient, and
deep-frying the resulting ingredient,
wherein the method further comprises the step of heating the ingredient for 120 seconds or shorter, after applying the phosphate cross-linked starch to the ingredient and before coating the ingredient with the oil/fat mixture.

5. The method according to claim 4, wherein the heating for 120 seconds or shorter is performed by steaming, heating in an oven, or deep-frying, at a heating temperature of 100°C or higher and 180°C or lower.

6. A deep-fried food product comprising:
a ingredient;
a coating material coating the ingredient; and
an oil/fat mixture provided between the ingredient and the coating material and
coating the ingredient,
wherein the oil/fat mixture comprises an oil/fat in a liquid form at normal temperature and a powdered oil/fat having a slip melting point of 40°C or higher, and
the oil/fat mixture exhibits fluidity at normal temperature.
